# EUROPÄISCHE PATENTANMELDUNG

(11) **EP 4 268 561 A1**
(43) Veröffentlichungstag der Anmeldung: **01.11.2023**
(21) Anmeldenummer: 23155840.4
(22) Anmeldetag: 09.02.2023
(51) Int. Cl.: A01B 69/04, A01D 41/127

(54) **LANDWIRTSCHAFTLICHER ARBEITSMASCHINENVERBUND UND ARBEITSMASCHINE DAFÜR**

(30) Priorität: 27.04.2022 DE 102022110115
(71) Anmelder: CLAAS E-Systems GmbH, 49201 Dissen (DE)
(72) Erfinder: Kettelhoit, Boris, 33335 Gütersloh (DE); Nacke, Eberhard, 33332 Gütersloh (DE); Baumgarten, Joachim, 48361 Beelen (DE); Bormann, Bastian, 33334 Gütersloh (DE); Heitmann, Christoph, 48231 Warendorf (DE); Wilken, Andreas, 49143 Bissendorf (DE)
(74) Vertreter: CLAAS Gruppe

(57) **Zusammenfassung**

Ein Verbund von landwirtschaftlichen Arbeitsmaschinen umfasst eine Anzahl von unbemannt arbeitsfähigen landwirtschaftlichen Arbeitsmaschinen (1; 4, 5, 6) und ein Überwachungssystem (12, 13), das eingerichtet ist, die Arbeitssituation wenigstens einer der Arbeitsmaschinen (1; 4, 5, 6) zu überwachen und bei Identifikation einer kritischen Arbeitssituation Maßnahmen zur Überwindung der identifizierten kritischen Arbeitssituation zu treffen.

## Beschreibung

Die vorliegende Erfindung betrifft einen Verbund von landwirtschaftlichen Arbeitsmaschinen, d.h. eine Gruppe von Arbeitsmaschinen, die bei der Erledigung einer gemeinsamen Aufgabe zusammenwirken, sowie speziell für das Zusammenwirken in einem solchen Verbund angepasste Arbeitsmaschinen.

Ein typisches Beispiel für einen solchen Verbund sind gemeinsam zum Abernten eines Feldes eingesetzte Maschinen. So beschreibt EP 1 513 389 B1 einen Verbund, in dem eine Erntemaschine, ein Transportfahrzeug, das auf dem Feld Erntegut von der Erntemaschine übernimmt, und ein Nutzkraftfahrzeug für den Straßentransport des Ernteguts zusammenwirken. Wenn wenigstens einzelne Maschinen eines solchen Verbundes autonom arbeiten können, eröffnet dies erhebliche Rationalisierungsmöglichkeiten. EP 1 513 389 B1 sieht daher vor, dass das Transportfahrzeug eingerichtet ist, sich autonom in einer festen örtlichen Beziehung zur Erntemaschine zu bewegen, um von dieser das Erntegut laufend zu übernehmen, und autonom das Nutzkraftfahrzeug anzufahren, um das gesammelte Erntegut dorthin zu übergeben.

Eine solche autonome Maschine muss zuverlässig in der Lage sein, auf wechselnde Umstände in ihrer Umgebung, die möglicherweise vom Entwickler der Maschine nicht vorhergesehen und daher in einem Betriebsprogramm der Maschine nicht berücksichtigt wurden, unfallfrei zu reagieren. Systeme der künstlichen Intelligenz für solche Zwecke befinden sich in der Entwicklung, erfordern aber eine hohe Rechenleistung in jeder Maschine eines solchen Verbunds. Selbst wenn solche Systeme mit der benötigten Zuverlässigkeit verfügbar wären, wäre ihr Einsatz mit erheblichen Kosten verbunden.

Es besteht daher Bedarf nach einem Maschinenverbund, in dem sich die erforderliche Betriebssicherheit autonom arbeitender Maschinen auf wirtschaftliche Weise sicherstellen lässt. Die vorliegende Erfindung soll Beiträge zur Lösung dieses Problems liefern.

Ein Beitrag besteht darin, in einem Verbund von landwirtschaftlichen Arbeitsmaschinen, der eine Anzahl von unbemannt arbeitsfähigen landwirtschaftlichen Arbeitsmaschinen und ein Überwachungssystem umfasst, das Überwachungssystem einzurichten, um die Arbeitssituation wenigstens einer der Arbeitsmaschinen zu überwachen und bei Identifikation einer kritischen Arbeitssituation Maßnahmen zur Überwindung der identifizierten kritischen Arbeitssituation zu treffen.

Die erfindungsgemäße Arbeitsmaschine kann diverse Arbeitsmodi unterstützen. Wenn neben einem autonomen auch ein fahrergesteuerter Modus unterstützt wird, kann die Überwachung auf den autonomen Modus beschränkt sein. Als autonome Modi kommen insbesondere in Betracht:
a) autonomes Navigieren auf einem Feld, z.B. satellitenunterstütztes Fahren eines Weges, auf dem das ganze Feld lückenlos bearbeitet wird;
b) Fahren in vorgegebener örtlicher Beziehung zu einer zweiten Arbeitsmaschine auf einem Feld, z.B. eines Transportfahrzeugs in Beziehung zu einer Erntemaschine, um Erntegut von dieser während der Fahrt zu übernehmen;
c) Fahren in vorgegebener örtlicher Beziehung zu einer zweiten Arbeitsmaschine auf einem öffentlichen Verkehrsweg, insbesondere das Fahren im Konvoi hinter einem - typischerweise bemannten - Leitfahrzeug.

Ziel der Maßnahmen zur Überwindung der identifizierten kritischen Arbeitssituation muss zunächst die Beseitigung einer mit dieser Arbeitssituation verknüpften eventuellen Gefahr, sei es für die Arbeitsmaschine selbst, für Personen oder für eine zweite Arbeitsmaschine oder andere Gegenstände in der Nähe, sein. Hierfür kommen in erster Linie in Betracht:
a. Anhalten der Arbeitsmaschine, optional nach einem Zurückweichen der Arbeitsmaschine;
b. Anhalten einer Baugruppe der Arbeitsmaschine;
c. Zulassen oder Anfordern einer Fernsteuerung der Arbeitsmaschine.
Grundsätzlich kann jede der Maßnahmen a., b., c. mit jedem der Modi a), b) c) kombiniert werden. Die Maßnahme a. ist in den meisten Fällen geeignet, b. kommt in erster Linie im Rahmen der Feldbearbeitung in den Modi a) oder b) in Betracht. Die Maßnahme c. wird insbesondere mit a. oder b. kombiniert.

Als kritische Arbeitssituationen werden im Rahmen der Erfindung insbesondere die folgenden betrachtet:
i) Verlassen eines Feldes und/oder Auffahren auf einen öffentlichen Verkehrsweg durch die Arbeitsmaschine. Es kann nicht davon ausgegangen werden, dass ein für die Feldarbeit geeigneter autonomer Betriebsmodus den Anforderungen des Straßenverkehrs gewachsen ist oder dafür zugelassen wäre;
ii) Änderung eines Betriebsparameters der Arbeitsmaschine, insbesondere eines Parameters von Feldfläche oder Erntegut, die von der Arbeitsmaschine bearbeitet werden. Eine solche Änderung, z.B. beim Feuchtegehalt von Erntegut, kann darauf hinweisen, dass neu aufgenommenes Erntegut nicht zu bereits geborgenem hinzugefügt werden sollte, um eine Qualitätseinbuße zu vermeiden;
iii) Befahren von feuchtem oder nachgiebigem Untergrund.

Um den Fahrer einer landwirtschaftlichen Arbeitsmaschine von diversen Steueraufgaben zu entlasten, sind Fahrerassistenzsysteme wie etwa das in EP 2 220 926 B1 beschriebene CEMOS-System der Anmelderin entwickelt worden, die eine automatische Anpassung eines Betriebsparameters der Arbeitsmaschine an von Sensoren laufend erfasste äußere Gegebenheiten ermöglichen, z.B. die Steuerung von Baugruppen eines Mähdreschers wie etwa Schneidwerk, Drescheinrichtung, Trennorgane oder Reinigungseinrichtung in einem Mähdrescher in Anpassung an Parameter wie etwa Massenstrom, Kornverlust, Kornqualität, Überkehrmenge etc. Ein solches Fahrerassistenzsystem kann auch in einem autonomen Betriebsmodus nützliche Aufgaben erfüllen, ist aber nicht notwendigerweise allen Situationen gewachsen, die im autonomen Betrieb auftreten können. Daher kann bei Verwendung eines solchen Fahrerassistenzsystems als weitere kritische Situation
iv) eine Situation angenommen werden, für die keine Anpassung im Fahrerassistenzsystem programmiert ist, oder eine Anpassung außerhalb eines erreichbaren Wertebereichs eines von dem Fahrerassistenzsystem gesteuerten Betriebsparameters liegt.

Eine erste Instanz des Überwachungssystems sollte an Bord jeder der unbemannt arbeitsfähigen landwirtschaftlichen Arbeitsmaschinen vorgesehen sein, um eine kritische Arbeitssituation ohne Zeitverluste aufgrund von Datenkommunikation mit entfernten Geräten erkennen zu können.

Eine von wenigstens einer der ersten Instanzen räumlich getrennte, insbesondere cloudbasierte, zweite Instanzkann eingerichtet sein, Maßnahmen zur Überwindung der identifizierten kritischen Arbeitssituation an die erste Instanz zur Ausführung zu übermitteln. Die Erkennung einer kritischen Situation ist mit an Bord der Arbeitsmaschine verfügbarer, begrenzter Rechenleistung realisierbar, da es genügt, eine Reihe von Parametern der Maschinenumgebung darauf abzuprüfen, ob sie zulässige Werte haben, und falls nicht, das Vorliegen einer kritischen Arbeitssituation festzustellen. Auch eine wenig spezifische Abhilfemaßnahme wie etwa die obige Maßnahme a. kann von der ersten Instanz getroffen werden.

Eine Diagnose, ob die festgestellte kritische Arbeitssituation tatsächlich eine Gefahr birgt und wie dieser ggf. durch eine weniger einschneidende Maßnahme als a. zu begegnen ist, kann von der zweiten Instanz ausgeführt werden. Da diese ggf. auf einen größeren Datenfundus zurückgreifen kann als die erste Instanz, kann sie qualifiziertere Entscheidungen treffen. Außerdem kann ein und dieselbe zweite Instanz zeitanteilig für mehrere Maschinen eines oder mehrerer Verbünde arbeiten; dies reduziert erheblich die Kosten der benötigten Rechenleistung.

Aus der räumlichen Trennung der Instanzen ergibt sich insbesondere die Möglichkeit, die oben beschriebene Diagnose oder Teile davon dem Betreiber des Verbunds als - insbesondere Cloud-gestützte - Dienstleistung anzubieten; für den Betreiber fallen somit beim Erwerb der Maschinen keine Investitionskosten an.

Die zweite Instanz kann ferner wenigstens teilweise in einer zweiten landwirtschaftlichen Arbeitsmaschine des Verbunds implementiert sein. Da die zweite Arbeitsmaschine sich beim gemeinsamen Einsatz meist in der Nähe der ersten Arbeitsmaschine befinden wird, die die kritische Arbeitssituation festgestellt hat, besteht die Möglichkeit, dass die zweite Arbeitsmaschine oder ein Fahrer derselben Informationen über die kritische Arbeitssituation gewinnen und der zweiten Instanz zugänglich machen können, die für die erste Arbeitsmaschine unerreichbar sind und die eine bessere Entscheidung über zu treffende Abhilfemaßnahmen ermöglichen.

Wenn die zweite Instanz wenigstens teilweise in der zweiten Arbeitsmaschine implementiert ist, eröffnet dies ferner die Möglichkeit, die Entscheidung über zu treffende Abhilfemaßnahmen dem Fahrer der zweiten Arbeitsmaschine zu überlassen; dazu sollte der in der zweiten landwirtschaftlichen Arbeitsmaschine implementierte Teil der zweiten Instanz eine Benutzerschnittstelle umfassen, über die der Fahrer eine Maßnahme zur Überwindung der identifizierten kritischen Arbeitssituation spezifizieren kann.

Insbesondere kann eine Benutzerschnittstelle der zweiten Arbeitsmaschine von einem lokalen Betriebsmodus, in dem ein in die Benutzerschnittstelle eingegebener Befehl auf eine lokale Baugruppe der Arbeitsmaschine wirkt, auf einen nichtlokalen Betriebsmodus umschaltbar sein, in dem der Befehl auf eine zu der lokalen Baugruppe funktionsgleiche Baugruppe der ersten Arbeitsmaschine wirkt.

So können etwa ein Fahrhebel oder ein Lenkrad sowie Fahrpedale der zweiten Arbeitsmaschine im lokalen Betriebsmodus in vertrauter Weise zum Lenken der zweiten Arbeitsmaschine dienen, während sie im nichtlokalen Betriebsmodus eine Fernsteuerung der ersten Arbeitsmaschine bewirken.

Zweckmäßigerweise kann die Benutzerschnittstelle ferner eingerichtet sein, bei Identifikation einer kritischen Arbeitssituation durch eine andere Arbeitsmaschine des Verbunds eine die andere Maschine identifizierende Angabe anzuzeigen, um den Fahrer der zweiten Arbeitsmaschine darauf aufmerksam zu machen, dass die erste Arbeitsmaschine seine Aufmerksamkeit erfordert.

Die Benutzerschnittstelle kann außerdem eingerichtet sein, in einem solchen Fall von einem oder mehreren Sensoren der ersten Arbeitsmaschine aufgenommene Daten anzuzeigen, um dem Fahrer der zweiten Arbeitsmaschine möglichst umfassende Information über die Situation der ersten Arbeitsmaschine zu liefern. Insbesondere kann die Benutzerschnittstelle einen Bildschirm aufweisen, um dort ein von einer Kamera der ersten Arbeitsmaschine aufgenommenes Bild von deren Umgebung anzuzeigen.

Einer wichtigen Anwendung zufolge ist die kritische Arbeitssituation das Fahren auf einem öffentlichen Verkehrsweg. Es liegt auf der Hand, dass hier die Notwendigkeit, andere Verkehrsteilnehmer schnell und sicher zu erfassen und ihr Verhalten zu antizipieren erheblich höhere Anforderungen an eine autonome Steuerung stellt als das Navigieren auf einem Feld zusammen mit Maschinen des gleichen Verbunds. Als Maßnahme zur Überwindung der kritischen Situation, d.h. um zwischen einem Feld und einem anderen oder einem Abstellplatz auf öffentlichen Wegen zu wechseln, kann ein Navigationsmodus genutzt werden, indem die die landwirtschaftliche Maschine eine vorgegebene Position relativ zu einem Leitfahrzeug einhält, insbesondere diesem in einem vorgegebenen Abstand nachfolgt. Das Problem, die Verkehrssituation zu beurteilen und angepasst zu reagieren kann so an das Leitfahrzeug bzw. dessen Fahrer delegiert werden.

Wenn die Arbeitsmaschine ein Vorsatzgerät trägt, kann vorgesehen werden, dass in oben genannten Navigationsmodus die erste Arbeitsmaschine im Rückwärtsgang fährt. Da sie - zumindest in dieser Situation - fahrerlos fährt, ist es nicht notwendig, dass von einer Fahrerkabine der ersten Arbeitsmaschine aus freier Blick nach vorn besteht; auch eine Beeinträchtigung des Sichtfeldes durch das - ggf. in eine für den Straßenverkehr geeignete Konfiguration von verminderter Breite gebrachte - Vorsatzgerät kann hingenommen werden.

Insbesondere bei Arbeitsmaschinen mit gelenkter Hinterachse - wie typischerweise bei Mähdreschern der Fall - kann das Rückwärtsfahren die Sicherheit sogar noch verbessern, da das bei solchen Maschinen bei Vorwärtsfahrt unvermeidliche und für andere Straßenverkehrsteilnehmer oft unerwartete starke Ausscheren des Hecks beim Abbiegen unterbleibt.

Eine Arbeitsmaschine des erfindungsgemäßen Verbundes sollte zweckmäßigerweise wahlweise in einem autonomen und in einem fahrergesteuerten Modus betreibbar sein.

Um im fahrergesteuerten Modus eine andere Arbeitsmaschine unterstützen zu können, die sich in einer kritischen Arbeitssituation befindet, muss die zweite Instanz wenigstens teilweise an Bord der erstgenannten Maschine vorhanden sein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine Anwendungssituation eines erfindungsgemäßen Maschinenverbunds;
- Fig. 2: ein Blockdiagramm eines Überwachungssystems des Maschinenverbunds;
- Fig. 3: einen Konvoi aus einem Traktor, dessen Anhänger und einem Mähdrescher.

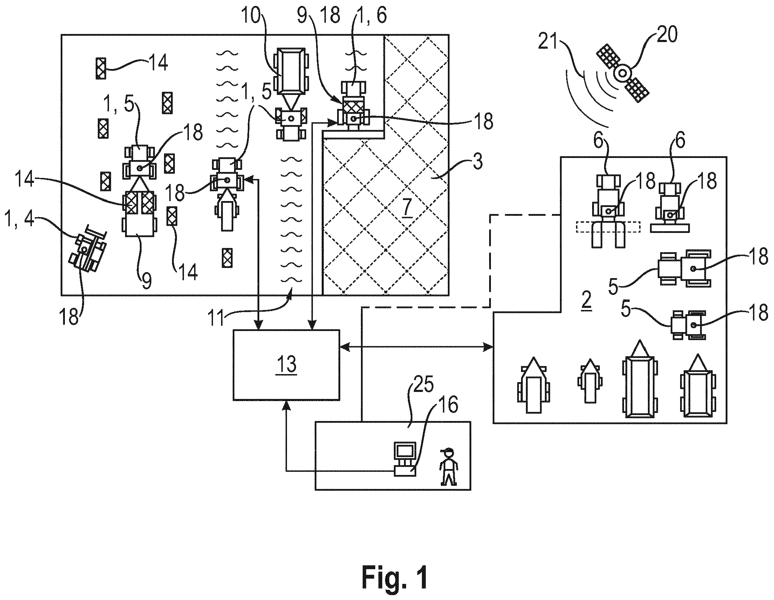

Ein Maschinenverbund eines landwirtschaftlichen Betriebs umfasst Arbeitsmaschinen 1 verschiedener Typen, die in Fig. 1 teils auf einem Abstellplatz 2, teils im Einsatz auf einem Feld 3 gezeigt sind. Zu den Arbeitsmaschinen 1 gehören insbesondere Traktoren 5, Mähdrescher 6, Frontlader 4. Auf dem Feld 3 ist ein Mähdrescher 6 dabei, einen Bestand 7 abzuernten und ausgedroschenes Stroh 11 auf der abgeernteten Fläche abzulegen. Ein Traktor 5 mit angehängter Ballenpresse 8 folgt dem Mähdrescher 6 nach, um das Stroh einzusammeln und zu Ballen 14 zu pressen, der Frontlader 4 hebt die Ballen 14 auf und deponiert sie auf einem von einem weiteren Traktor 5 gezogenen Anhänger 9. Ein dritter Traktor 5 mit Anhänger 10 fährt neben dem Mähdrescher 6 her, um in der Fahrt Korn von diesem zu übernehmen.

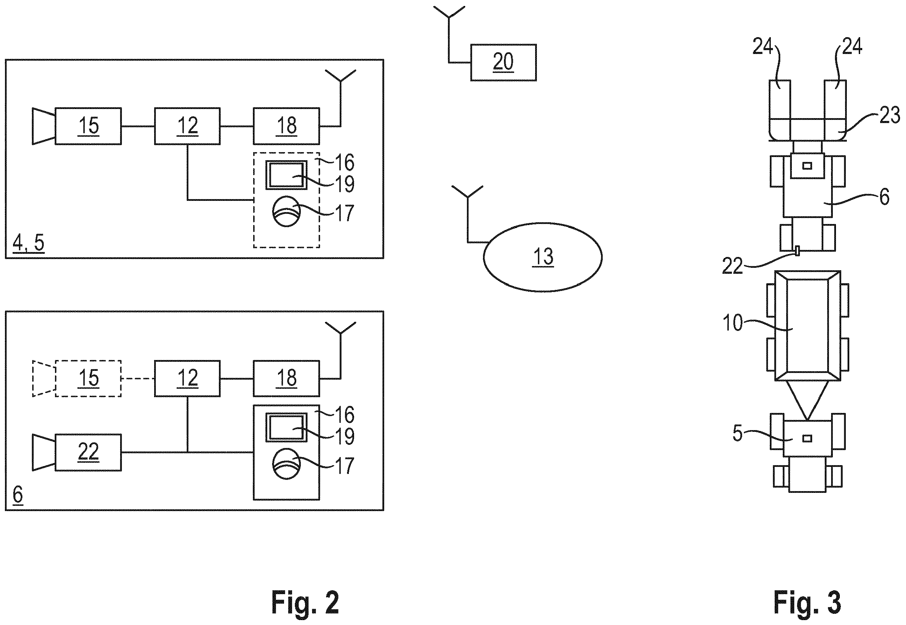

Jede Maschine 1 verfügt wie in Fig. 2 gezeigt über einen Bordcomputer 12 mit angeschlossener Funkschnittstelle 18, einerseits für die Kommunikation mit einer entfernten zentralen Steuerinstanz 13, zum anderen für den Empfang von Navigationssignalen 21 von einem System von Navigationssatelliten 20, anhand derer der Bordcomputer 12 in an sich bekannter Weise die Position der Maschine 1 ermitteln kann.

Der Bordcomputer 12 ist ferner mit diversen Sensoren zum Erfassen von Betriebsparametern der Maschine 1 und ihrer Umgebung verbunden, insbesondere mit wenigstens einer Kamera 15, die an einer Fahrerkabine der Maschine 1 angeordnet ist, um ein Bild der Umgebung ähnlich dem aufzunehmen, das sich einem Fahrer der Maschine 1 darbieten würde, wenn er sich in der Fahrerkabine befände.

Die Auswertung der Navigationssignale 21 und die Daten von den Sensoren ermöglichen es dem Bordcomputer 12 sowohl, die Maschine 1 autonom zu navigieren als auch beim autonomen Navigieren den Eintritt einer Abbruchbedingung zu erkennen, die eine Fortsetzung des autonomen Navigierens unmöglich oder gefährlich macht. Eine solche Abbruchbedingung kann beispielsweise sein, dass die Maschine 1 die Grenzen des Feldes 3 erreicht und um weiterzufahren, auf einen öffentlichen Verkehrsweg wechseln müsste, für den das zum Navigieren auf dem Feld 3 verwendete Dienstprogramm nicht tauglich oder nicht zugelassen ist. Eine solche Situation kann sich insbesondere bei dem Traktor 5 mit Anhänger 10 ergeben, wenn dieser in an sich bekannter Weise autonom neben dem Mähdrescher 6 herfährt, um in der Fahrt Korn vom Mähdrescher 6 auf den Anhänger umzuladen, und beide zum Wenden das Feld 3 zeitweilig verlassen und einen öffentlichen Verkehrsweg nutzen müssen.

Eine weitere mögliche Abbruchbedingung ist dass die Bilder der Kamera 15 Bewegungen zeigen, die nicht Bewegungen andere Maschinen sind und auf eine von der Maschine 1 gefährdete Person zurückgehen könnten, z.B. wenn dem autonom arbeitenden Frontlader 4 das Aufladen eines Ballens 14 auf den Anhänger 9 misslingt und dieser vom Anhänger 9 wieder herunterfällt.

Eine Abbruchbedingung kann aber auch darin liegen, dass ein Teil des von der Kamera 15 aufgenommenen Bildes von dem Dienstprogramm nicht sicher identifiziert werden kann und ein vor der Maschine 1 liegendes Objekt zeigen könnte, das nicht überfahren werden darf, dass Daten untereinander nicht konsistent sind, beispielsweise wenn Tachometerdaten nicht zur Entwicklung der anhand der Navigationssignale ermittelten Position passen, weil die Maschine 1 sich festgefahren hat, oder dass ein Sensor Daten liefert, die außerhalb eines zulässigen Bereichs liegen. Wenn an Bord der Maschine 1 ein Assistenzsystem wie etwa ein CEMOS-System im Einsatz ist, kann auch der Fall auftreten, dass ein Sensor an das Assistenzsystem Daten liefert, die so weit außerhalb eines normalen Wertebereichs liegen, dass das Assistenzsystem über keine angemessene Reaktionsmöglichkeit verfügt, sei es weil für den Umgang mit diesen Werten überhaupt kein Algorithmus in dem Assistenzsystem hinterlegt worden ist oder weil zwar ein vorhandener Algorithmus auf diese Werte angewandt werden kann, der Algorithmus aber unbrauchbare Ergebnisse liefert, wie etwa einen Sollwert für eine von dem Assistenzsystem gesteuerte Betriebsgröße die außerhalb eines technisch realisierbaren Wertebereich liegt.

Wenn der Bordcomputer 12 den Eintritt einer Abbruchbedingung erkennt, muss er zunächst einen Zustand herstellen, in dem die Maschine 1 weder Gefahr läuft, Schaden zu erleiden, noch Schaden anzurichten. In den meisten Fällen genügt es dafür, jegliche Bewegung der Maschine 1 zu stoppen; unter Umständen, insbesondere wenn die Abbruchbedingung eine beobachtete Bewegung ist, kann es zusätzlich nötig sein, die Maschine 1 auf dem bereits zurückgelegten Weg bis mindestens an die Stelle, an der die Abbruchbedingung eingetreten ist, zurückzubewegen. Anschließend übermittelt der Bordcomputer 12 die Daten, anhand derer die Abbruchbedingung erkannt wurde, über die Funkschnittstelle 18 an die Steuerinstanz 13. Da die Steuerinstanz 13 vorgesehen ist, um solche Daten von allen Maschinen 1 des Betriebs und eventuell noch anderer Betriebe zu empfangen, hat sie eine höhere Rechenleistung und damit weiterreichende Fähigkeiten zur Bildauswertung und Erkennung von Objekten als ein einzelner Bordcomputer 12. Die Steuerinstanz 13 kann einen stationären Rechner des landwirtschaftlichen Betriebs umfassen, der über detaillierte Daten zu den Feldern des Betriebs verfügt und diese zur Analyse der übermittelten Daten heranziehen kann, um etwa eine bereits in früheren Einsätzen auf dem Feld 3 festgestellte Besonderheit wie etwa ein Gebäude oder eine Pfütze in den Bildern der Kamera 15 wiederzuerkennen und festzulegen, ob diese überfahren werden darf oder ihr ausgewichen werden muss. Weiterer Bestandteil der Steuerinstanz 13 kann ein Rechner des Herstellers der Maschine 1 sein, der über detaillierte, eventuell sogar vertrauliche, technische Informationen über die Maschine 1 verfügt und diese nutzen kann, um auffällige Sensorsignale zu analysieren und eventuelle Maßnahmen zu ihrer Behebung festzulegen.

Wenn also etwa die Maschine 1 sich einer Wasserlache nähert und die Kamera 15 ein Bild davon liefert, dass der Bordcomputer 12 nicht analysieren kann, so stellt dies eine kritische Situation dar, deren Handhabung die Fähigkeiten des Bordcomputers 12 übersteigt. Daher gibt dieser das Bild und Daten zur eigenen Position weiter an die Steuerinstanz 13, und diese kann, da sich die Wasserlache an einer dafür bekannten Stelle befindet, der Maschine 1 als Abhilfemaßnahme die Weisung erteilen, die Wasserlache zu ignorieren und hindurchzufahren. Denkbar ist aber auch, dass die Steuerinstanz 13 anhand der aus dem Bild entnehmbaren Größe der Wasserlache, anhand von Niederschlagsdaten der vergangenen Tage, anhand von früher an derselben Stelle gemachten Erfahrungen oder anhand des Typs der Maschine 1 entscheidet, dass sie umfahren werden soll, oder dass die Lösung des Problems auch die Fähigkeiten der Steuerinstanz 13 übersteigt.

So kann etwa in dem Fall, dass die Maschine 1 der Frontlader 4 ist, die Anweisung zum Durchfahren der Wasserlache gegeben werden, während im Fall eines Traktors 5 mit Anhänger 9 oder 10 aufgrund der Gefahr des Steckenbleibens eine Anweisung zum Umfahren zweckmäßiger sein kann, oder die Steuerinstanz 13 zu dem Ergebnis gelangen kann, dass ihr nicht genügend Informationen zur Verfügung stehen, um einen sicheren Weg zum Umfahren festzulegen.

Wenn die Steuerinstanz 13 zu dem Ergebnis gelangt, dass sie das Problem, das zum Eintritt der Abbruchbedingung geführt hat, nicht lösen kann, ermittelt sie, welche der übrigen Maschinen, die sich auf dem Feld 3 im Einsatz befinden, bemannt ist. Dies kann z.B. der Mähdrescher 6 sein. Wie der Frontlader 4 oder der Traktor 5 hat dieser einen Bordcomputer 12 und eine Funkschnittstelle 18. Der Bordcomputer 12 ist verbunden mit einer Benutzerschnittstelle 16, die alle vom Fahrer zum Navigieren des Mähdreschers 6 benutzten Bedienelemente 17 wie etwa ein Lenkrad oder einen Lenkhebel, Pedale etc. sowie einen Bildschirm 19 umfasst. Der Bildschirm 19 kann im normalen fahrergesteuerten Betrieb dazu dienen, Bilder einer am Heck des Mähdreschers 6 installierten, nach hinten blickenden Kamera 22 anzuzeigen. Die Steuerinstanz 13 sendet einen Hinweis an den Mähdrescher 6, um dessen Fahrer darauf hinzuweisen, dass eine andere Maschine auf dem Feld 3 ein Problem hat und um welche Maschine, also z.B. den Traktor 5, es sich handelt.

Es kann vorgesehen werden, dass der Fahrer den Mähdrescher 6 erst zum Stehen bringen muss, um sich dem Problem gefahrlos widmen zu können. Bevorzugt ist allerdings, dass auch der Mähdrescher 6 einen autonomen Betriebsmodus unterstützt, dann genügt es, dass der Fahrer einen Wechsel in diesen autonomen Modus genehmigt.

Die im Stillstand oder in dem autonomen Modus nicht benötigte Benutzerschnittstelle 16 steht nun zur Verfügung, um den Traktor 5 zu steuern. Dazu empfängt der Bordcomputer 12 des Mähdreschers 6 die von der Kamera 15 des Traktors 5 gelieferten Bilder und andere Betriebsgrößen des Traktors 5, um sie auf dem Bildschirm 17 anzuzeigen, und überträgt vom Fahrer an den Bedienelementen 16 vorgenommene Eingaben an den Traktor 5, um diesen fernzusteuern. So kann der Fahrer seine Erfahrung und Kenntnis der lokalen Bodenbeschaffenheit nutzen, um den Traktor 5 um die Wasserlache herumzulenken oder ihn aus umgebendem Morast zu befreien. Nachdem dies erledigt ist, gibt er die Kontrolle über den Traktor 5 wieder frei, und dieser nimmt seinen autonomen Betrieb wieder auf.

Es kann vorgesehen sein, dass mehrere der Maschinen 1, vorzugsweise alle, sowohl die die Fahrerperspektive nachbildende Kamera 15 als auch die Benutzerschnittstelle 16 aufweisen, um einerseits fahrerlos eingesetzt werden zu können und im fahrerlosen Betrieb wie oben beschrieben Hilfe durch die Steuerinstanz 13 oder den Fahrer einer anderen Maschine in Anspruch nehmen zu können, als auch im Betrieb mit Fahrer anderen Maschinen solche Hilfe zukommen lassen zu können.

Denkbar ist auch, an der Steuerinstanz 13 einen Arbeitsplatz 25 einzurichten, der mit einer Benutzerschnittstelle 16 gleichwertig der des Mähdreschers 6 ausgestattet ist; so kann, wenn eine der im Einsatz befindlichen Maschinen 1 auf ein Problem stößt, dass weder ihr Bordcomputer noch die Steuerinstanz lösen können, anstelle des Fahrers auf dem Feld 3 ein Mitarbeiter an diesem Arbeitsplatz zeitweilig die Steuerung der Maschine übernehmen.

Der Mähdrescher 6 trägt im Feldeinsatz einen Erntevorsatz 23, dessen Breite oft größer ist als im öffentlichen Straßenverkehr zulässig. Um dann, wenn der Mähdrescher 6 öffentliche Straßen befahren muss, seine Breite zu reduzieren, können seitlich über die Karosserie des Mähdreschers überstehende Teile 24 des Erntevorsatzes 23 nach vorn schwenkbar sein, wie in Fig. 1 am Beispiel eines der Mähdrescher 6 auf dem Abstellplatz 2 gezeigt. Eine solche Breitenreduzierung macht die Teilnahme am Straßenverkehr aber noch nicht unproblematisch; es kann sein, dass der Mähdrescher, bevor sein Fahrer er eine Kreuzung richtig einsehen kann, so weit in den Kreuzungsbereich vorfahren muss, dass die vorspringenden Teile 24 bereits ein Problem für den Querverkehr darstellen.

Um dieses Problem zu lindern, unterstützt der Bordcomputer des Mähdreschers 6 einen autonomen Nachfahr-Betriebsmodus, in dem wie zuvor auf dem Feld der Traktor 5 und der Mähdrescher 6 in einer festen örtlichen Beziehung zueinander bewegen, doch anstatt dass der Traktor 5 autonom dem Mähdrescher 6 nachfolgt, ist es nun der Mähdrescher 6, der der Bewegung des Traktors 5 (oder einer anderen Maschine, die ihm als Leitfahrzeug zugewiesen worden ist) folgt, und zwar, wie in Fig. 3 gezeigt im Rückwärtsgang. Die Kamera 22 am Heck des Mähdreschers 6 ist nun nach vorn, auf den Traktor 5 bzw. seinen Anhänger 10, ausgerichtet, was es dem Bordcomputer 12 des Mähdreschers 6 einfach macht, diesen dem Traktor 5 in konstantem Abstand und ohne nennenswerten seitlichen Versatz nachzuführen. So bilden der Traktor 5 und der Mähdrescher 6 einen Konvoi, so dass etwa der Mähdrescher 6 dem Traktor genauso wie der Anhänger 10 verkehrsregelkonform über eine Ampel nachfolgen darf, auch wenn diese, nachdem der Traktor 5 sie passiert hat aber bevor der Mähdrescher 6 sie erreicht, auf Rot umschaltet. Da bei der Rückwärtsfahrt die gelenkte Achse des Mähdreschers 6 vorn ist, schwenkt beim Durchfahren einer Kurve nur das hintere Ende des Konvois aus, nicht aber ein mittlerer oder vorderer Abschnitt, was die Sicherheit für andere Fahrzeuge beim Überholen des Konvois verbessert.

Um den Konvoi zu bilden, kann der Fahrer noch auf dem Feld 3 beide Maschinen 5, 6 in die für die Konvoifahrt vorgesehene relative Stellung bringen, den Traktor 5 besteigen und mit diesem vom Feld fahren, woraufhin der Mähdrescher 6 auf demselben Wege nachfolgt. Wenn er zunächst an Bord des Mähdreschers 6 bleibt und mit diesem das Feld verlässt, dann erkennt der Bordcomputer 12 des Traktors 5 beim Verlassen des Feldes eine Abbruchbedingung und beendet das autonome Fahren. Der Fahrer kann ihn nun wie oben beschrieben vom Mähdrescher 6 aus steuern, um ihn in die für die Konvoifahrt passend zum Mähdrescher 6 zu positionieren, oder er kann hierfür auf den Traktor 5 wechseln. Die Benutzerschnittstelle des Traktors 5 weist dieselben Funktionalitäten auf wie die Benutzerschnittstelle 15 des Mähdreschers, d.h. über sie kann er den Mähdrescher 6 wenn nötig fernsteuern, und über sie aktiviert er schließlich den Nachfahr-Betriebsmodus des Mähdreschers 6. So kann er beide gleichzeitig zurück zum Abstellplatz 2 fahren.

Bei Bedarf kann der Konvoi um weitere auf dem Feld 3 im Einsatz gewesene Maschinen erweitert werden, beispielsweise indem hinter dem Anhänger 10 zunächst der Frontlader 4 platziert und ihm der Anhänger 10 als Leitfahrzeug zugewiesen wird, dem er in vorgegebenem Abstand zu folgen hat, und der Mähdrescher 6 den Frontlader 4 als Leitfahrzeug zugewiesen bekommt.

Während des Fahrens im Konvoi setzt der Bordcomputer 12 des Mähdreschers 6 die Überwachung auf das Vorliegen eventueller kritischer Situationen fort. Eine solche Situation kann beispielsweise vorliegen, wenn der Abstand zum Leitfahrzeug einen vorgegebenen Grenzwert überschreitet, oder wenn ein fremdes Fahrzeug sich zwischen den Mähdrescher 6 und das Leitfahrzeug schiebt. Zur Wahrung der Verkehrssicherheit hält der Mähdrescher 6 an. Daraufhin kann das Leitfahrzeug anhalten und zum Mähdrescher 6 zurückkehren, um den Konvoi wiederherzustellen, oder der Mähdrescher kann in ferngesteuertem Betrieb wieder zum Leitfahrzeug aufschließen.

### Bezugszeichenliste

1 Arbeitsmaschine
2 Abstellplatz
3 Feld
4 Frontlader
5 Traktor
6 Mähdrescher
7 Bestand
8 Ballenpresse
9 Anhänger
10 Anhänger
11 Stroh
12 Bordcomputer
13 Steuerinstanz
14 Ballen
15 Kamera
16 Benutzerschnittstelle
17 Bedienelement
18 Funkschnittstelle
19 Bildschirm
20 Navigationssatellit
21 Navigationssignal
22 Kamera
23 Erntevorsatz
24 Teil
25 Arbeitsplatz

## Patentansprüche

1. Verbund von landwirtschaftlichen Arbeitsmaschinen, eine Anzahl von unbemannt arbeitsfähigen landwirtschaftlichen Arbeitsmaschinen (1; 4, 5, 6) und ein Überwachungssystem umfassend, **dadurch gekennzeichnet, dass** das Überwachungssystem eingerichtet ist, die Arbeitssituation wenigstens einer der Arbeitsmaschinen (1; 4, 5, 6) zu überwachen und bei Identifikation einer kritischen Arbeitssituation Maßnahmen zur Überwindung der identifizierten kritischen Arbeitssituation zu treffen.

2. Verbund nach Anspruch 1, **dadurch gekennzeichnet, dass** das Überwachungssystem eingerichtet ist, die Arbeitssituation der wenigstens einen Arbeitsmaschine (1; 4, 5, 6) in einem autonomen Modus zu überwachen, wobei der autonome Modus optional ausgewählt ist unter:
a) autonomem Navigieren auf einem Feld;
b) Fahren in vorgegebener örtlicher Beziehung zu einer zweiten Arbeitsmaschine auf einem Feld;
c) Fahren, insbesondere Rückwärtsfahren, in vorgegebener örtlicher Beziehung zu einer zweiten Arbeitsmaschine auf einem öffentlichen Verkehrsweg,
und wobei ferner optional die Arbeitsmaschine (1; 4, 5, 6) wahlweise in dem autonomen und in einem fahrergesteuerten Modus betreibbar ist.

3. Verbund nach Anspruch 1 oder 2, **dadurch gekennzeichnet, dass** die Maßnahmen mindestens eine der folgenden umfassen:
a. Anhalten der Arbeitsmaschine, optional nach einem Zurückweichen der Arbeitsmaschine (1; 4, 5, 6);
b. Anhalten einer Baugruppe der Arbeitsmaschine;
c. Zulassen oder Anfordern einer Fernsteuerung der Arbeitsmaschine.

4. Verbund nach einem der vorhergehenden Ansprüche, **dadurch gekennzeichnet, dass** die kritische Arbeitssituation mindestens eine der folgenden ist:
i) Verlassen eines Feldes und/oder Auffahren auf einen öffentlichen Verkehrsweg durch die Arbeitsmaschine;
ii) Änderung eines Betriebsparameters der Arbeitsmaschine, insbesondere eines Parameters von Feldfläche oder Erntegut, die von der Arbeitsmaschine bearbeitet werden;
iii) Befahren von feuchtem oder nachgiebigem Untergrund.

5. Verbund nach einem der vorhergehenden Ansprüche, **dadurch gekennzeichnet, dass** die landwirtschaftliche Arbeitsmaschine mit einem Fahrerassistenzsystem, insbesondere einem CEMOS-System, zum automatischen Anpassen eines Betriebsparameters der Arbeitsmaschine ausgestattet ist, und dass das die kritische Arbeitssituation ist:
iv) eine Situation, für die keine Anpassung im Fahrerassistenzsystem programmiert ist, oder eine Anpassung außerhalb eines erreichbaren Wertebereichs eines von dem Fahrerassistenzsystem gesteuerten Betriebsparameters liegt.

6. Verbund nach einem der vorhergehenden Ansprüche, **dadurch gekennzeichnet, dass** wenigstens eine erste Instanz (12) des Überwachungssystems zum Identifizieren einer kritischen Arbeitssituation an Bord jeder der unbemannt arbeitsfähigen landwirtschaftlichen Arbeitsmaschinen (1; 4, 5, 6) vorgesehen ist.

7. Verbund nach Anspruch 6, bei dem das Überwachungssystem eine von wenigstens einer der ersten Instanzen (12) räumlich getrennte, optional wenigstens teilweise cloudbasierte, zweite Instanz (13, 12) umfasst, wobei die zweite Instanz (13, 12) eingerichtet ist, Maßnahmen zur Überwindung der identifizierten kritischen Arbeitssituation an die erste Instanz (12) zur Ausführung zu übermitteln.

8. Verbund nach Anspruch 7, **dadurch gekennzeichnet, dass** die zweite Instanz (13, 12) wenigstens teilweise in einer zweiten landwirtschaftlichen Arbeitsmaschine (1; 4, 5, 6) des Verbunds implementiert ist.

9. Verbund nach Anspruch 8, **dadurch gekennzeichnet, dass** der in einer zweiten landwirtschaftlichen Arbeitsmaschine (1; 4, 5, 6) des Verbunds implementierte Teil (12) der zweiten Instanz (13,12) eine Benutzerschnittstelle (16) umfasst, über die eine Maßnahme zur Überwindung der identifizierten kritischen Arbeitssituation spezifizierbar ist.

10. Verbund nach Anspruch 9 oder landwirtschaftliche Arbeitsmaschine (6) für einen solchen Verbund, **dadurch gekennzeichnet, dass** eine Benutzerschnittstelle (16) der Arbeitsmaschine (6) von einem lokalen Betriebsmodus, in dem ein in die Benutzerschnittstelle (16) eingegebener Befehl auf eine lokale Baugruppe der Arbeitsmaschine (6) wirkt, auf einen nichtlokalen Betriebsmodus umschaltbar ist, in dem der Befehl auf eine zu der lokalen Baugruppe funktionsgleiche Baugruppe einer anderen Arbeitsmaschine (5) des Verbunds wirkt.

11. Verbund oder landwirtschaftliche Arbeitsmaschine nach Anspruch 10, **dadurch gekennzeichnet, dass** die Benutzerschnittstelle (16) eingerichtet ist, bei Identifikation einer kritischen Arbeitssituation durch eine andere Arbeitsmaschine (5) des Verbunds eine die andere Maschine (5) identifizierende Angabe und/oder von einem oder mehreren Sensoren (15) der anderen Maschine (5) aufgenommene Daten anzuzeigen.
